# EUROPEAN PATENT APPLICATION

(11) **EP 4 792 650 A1**
(43) Date of publication of application: **19.08.2026**
(21) Application number: 24863895.9
(22) Date of filing: 29.07.2024
(51) Int. Cl.: A22C 21/00, A22B 7/00, G01G 17/08

(54) **LIVE POULTRY SORTING MACHINE**

(30) Priority: 15.09.2023 BR 102023018725
(71) Applicant: Tech-4 Solution Equipamentos Ltda, CEP: 85911-000 55 Toledo (BR)
(72) Inventor: COSTA ROQUE, Mateus, 55 TOLEDO (BR)
(74) Representative: Isern Patentes y Marcas S.L.
(86) International application number: PCT/BR2024/050332
(87) International publication number: WO 2025/054683

(57) **Abstract**

The present invention relates to a machine designed for use in the commercial poultry sector, with the function of sorting live poultry into different weight categories. The machine comprises a structure (E) on which a first ramp (R1) is mounted, on which the bird is initially deposited and slides involuntarily to a dynamic scale (B), where it is weighed and sent (automatically) to a second ramp (R2) which is provided with articulated collecting paddles (K) for removing the bird to a side ramp (R3), from where it falls into a collecting box according to its weight category. The inclination of the ramps thus ensures that the bird does not stop or turn back along the way but slides at a constant speed, preventing errors in the sorting process.

## Description

### FIELD OF THE INVENTION

This invention relates to a machine designed for use in the commercial poultry industry, specifically for use inside facilities dedicated to handling poultry, more particularly small live birds. It is used to separate the birds into different weight categories for subsequent processing according to their weight categories, among other needs.

### DESCRIPTION OF THE PRIOR ART

It is known that poultry farming for meat consumption, among other purposes - mainly chickens - is of great importance to human civilization, since these birds and their by-products constitute an important part of the human diet. Therefore, in the region most suitable for poultry farming, there are a large number of farms, each housing thousands of confined birds, which are then sent to slaughterhouses after their growth and fattening period, or remain there for a longer time in the case of laying hens or breeding stock, which are birds used for reproduction purposes.

In turn, one of the most important tasks within a poultry farm for human consumption is the separation of the birds into weight categories. This task begins from the moment the eggs hatch, with the aim of categorizing the chicks according to weight, sex, and other characteristics. Currently, for breeders to carry out this selection of birds by weight, they use small commercial scales, which are the "platform" models widely used in commercial establishments for weighing various goods (scales used in bakeries, grocery stores, etc.). These scales offer a satisfactory degree of accuracy; however, their operation is slow and they do not have features for recording the weightings performed. Therefore, when used for weighing live birds inside the hatcheries, employees must place the birds one by one on the scale, and according to the weight observed, the same employee places the bird in a specific collection box for each weight category. This mode of operation does not provide satisfactory productivity, requiring a large number of scales and trained employees to meet production demands.

In turn, some more specialized weighing equipment has already been designed and offered to breeders, such as suspended scales, in which the birds are hung individually. These scales have more sophisticated features, such as recording of the weighings performed and software for processing the collected data; however, these scales also provide the same low productivity observed with the use of common scales, in addition to having a higher cost.

In turn, it is also known the use other models of weighing and separation equipment by weight categories, which are employed in poultry cutting installations Said configurations being defined basically by horizontal mats, over which the cuts are automatically or manually deposited by helpers. At the end of said mat a dynamic passing balance is arranged, which carries out the weighing of the moving cut, and puts it downstream, on a second horizontal belt, which is equipped with angularly articulated collector blades, which collect the cuts from the second belt, according to their weight category, and deposit those in collecting boxes arranged on the sides of said second mat. This type of equipment proves very efficient for operations with inert products, such as poultry cuts, among others; however, its use for weighing and separating live poultry is highly inefficient, since live birds move around and can make movements that negate the purpose of the machine. For example, a bird might accelerate its pace and join another in the weighing area, resulting in weighing errors, or the birds might walk backward or forward in the area of the collecting paddles, where the operation is based on a time-counting relationship from the moment they leave the scale, which can result in birds being sent to the wrong collection box, among other inconveniences.

### OBJECT OF THE INVENTION

The present invention was developed with the aim of solving these inconveniences and limitations. It proposes a machine specially configured for weighing and separating live birds, mainly chicks. This machine solves the problem of the mobility of live birds by proposing a first sliding ramp from an entry point for the birds to the scale, so that the bird slides involuntarily and at a constant speed ensuring that each bird passes individually through the aforementioned scale; and after passing through the scale, the live bird is automatically directed to a second ramp, which is equipped with articulated collecting paddles for removal, so that the inclination of this second ramp ensures that the bird does not stop or go back along the path, also sliding at a constant speed, and being collected at programmed points, according to its weight category.

### DESCRIPTION OF THE DRAWINGS

For a better understanding of the present invention, a detailed description is made below with reference to the attached drawings, wherein:

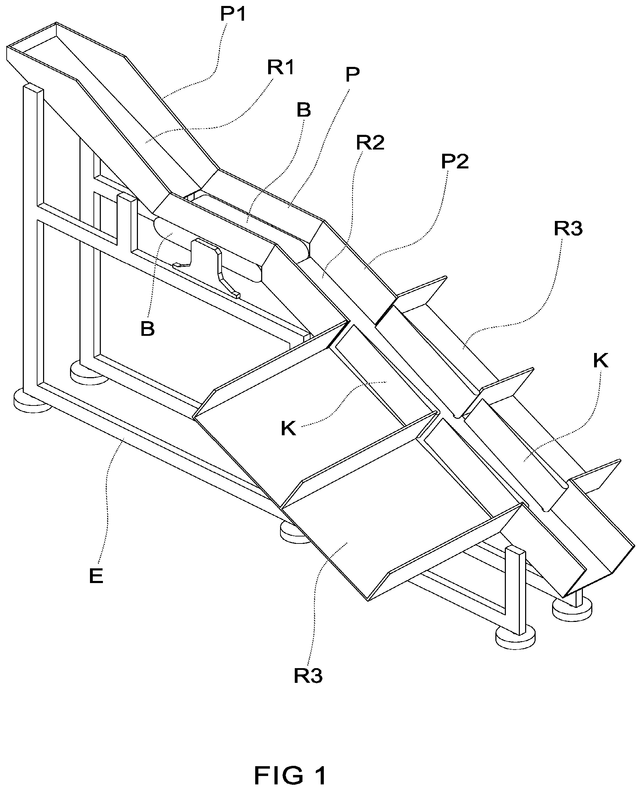

FIG. 1 illustrates the perspective machine and assembled arrangement;

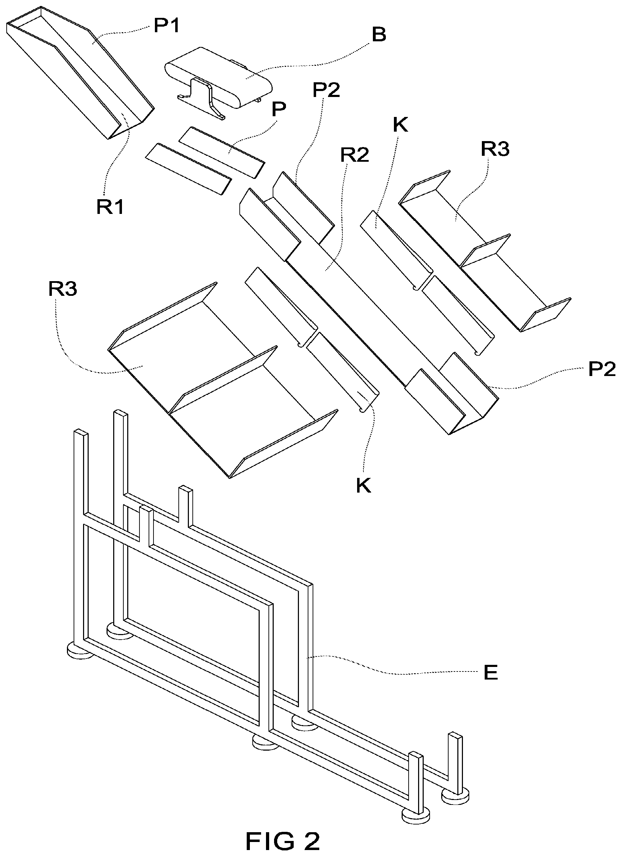

FIG. 2 illustrates the perspective machine and exploded arrangement;
FIG. 3 illustrates the machine in top view;

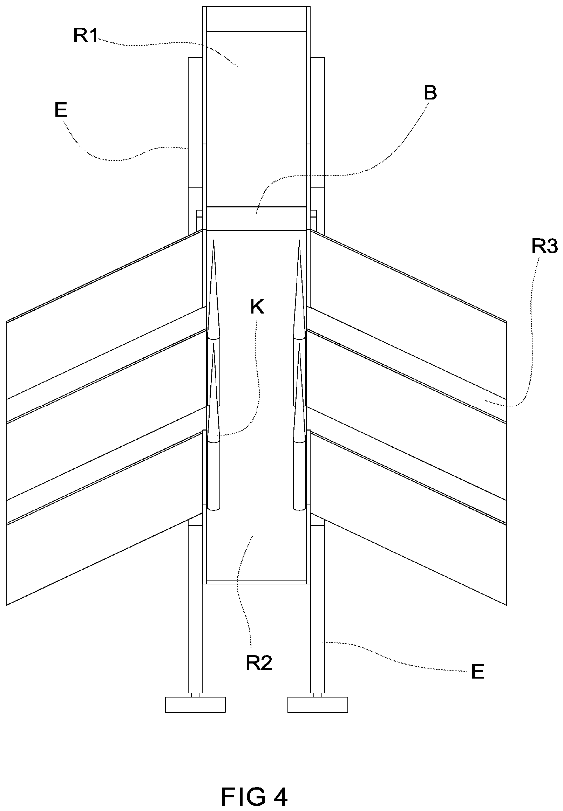

FIG. 4 illustrates the machine in front view;

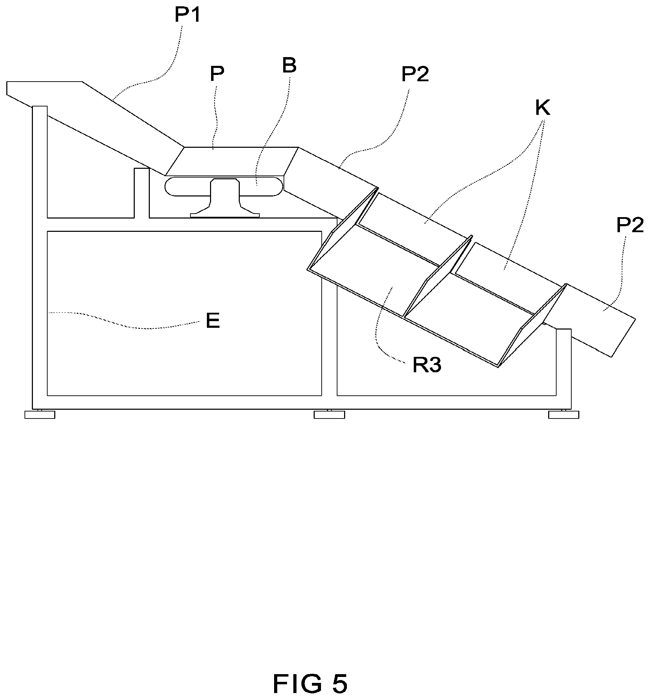

FIG. 5 illustrates the machine in side view.

### DETAILED DESCRIPTION OF THE INVENTION

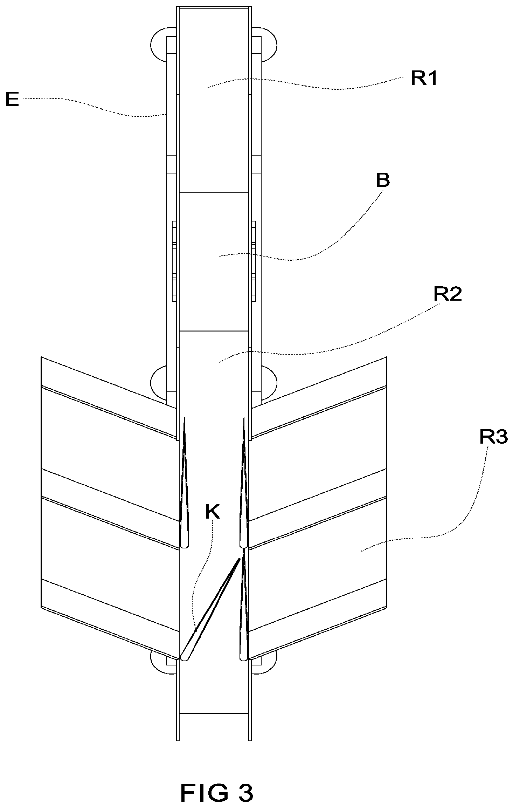

The invention initially comprises a base structure (E), made of profiles, which has its rear region higher, while its front region is lower. A descending rear ramp (R1) is mounted on the rear region of this structure (E), starting from its rear end, and is laterally delimited by walls (Pl). In turn, in the middle region of the structure (E), immediately downstream of the mentioned rear ramp (R1), a dynamic scale (B) is mounted, which is arranged horizontally and is laterally delimited by walls (P1). In the anterior region of the structure (E), downstream of the weighing scale (B), an anterior ramp (R2) is mounted, which is laterally delimited by walls (P2), which are provided with open intervals, next to which descending lateral ramps (R3) are mounted; and in the transition regions from the anterior ramp (R2) to the lateral ramps (R3), automated collecting blades (K) are mounted, which perform a semi-rotational angular movement by means of a motorized drive (not shown) as shown in FIG. 3. Finally, the structure (E) also includes control panels (not shown), or any other equipment necessary for the operation of this machine.

The operation of the present invention is simple and practical. Since, the live poultry to be selected should be put one by one on the back ramp (R1), at their highest point; and this operation may be manually done - by helpers - or in an automated manner, a machine fed with live birds deposits one bird at a time onto the aforementioned rear ramp (R1) in a continuous flow. As each live bird is deposited at the top of the rear ramp (R1), the bird slides involuntarily to the front and lower end of the rear ramp (R1), from where it gently falls onto the dynamic scale (B), where its weight is identified and recorded. The scale (B) then transports the bird forward, subsequently dropping it gently onto the rear higher end of the front ramp (R2). At this point, according to the programmed settings, the machine's logic system has already determined which lateral ramp (R3) the bird should be directed to, based on its weight, so that the bird then slides down the front ramp (R2) and the collecting paddle (K) corresponding to the lateral ramp (R3) designated to receive the bird of that weight pivots angularly to the opposite edge of the anterior ramp (R2) - as illustrated in FIG. 3 - and, upon returning to its initial position, the collecting paddle (K) pushes the bird perpendicularly onto the corresponding lateral ramp (R3), from where the bird falls into a collecting box properly positioned there. Finally, if any bird does not fall into any of the pre-programmed weight categories, or if the weighing is inconclusive, or if any other abnormality is detected during weighing, none of the collecting paddles (K) are activated, and the bird slides to the end of the anterior ramp (R2), where it is collected in a corresponding collecting box.

Logically, the present invention can be constructed with a variety of materials, and diverse dimensions and proportions, according to the needs of use, provided that its essential and particular characteristics, which are necessary for its operation, are maintained.

## Claims

1. A live poultry selecting machine, **characterized in that** it comprises a base structure (E), which has its highest back region, while its previous region is lower; on the rear region of said structure (E), from the rear end thereof, a rear descending ramp (Rl) is mounted, which is delimited laterally by walls (Pl); and wherein, in the middle region of the structure (E), contiguously downstream of said posterior ramp (R1), a dynamic balance (B) is mounted, which is disposed horizontally, and is delimited laterally by walls (P); and wherein, in the front region of the structure (E), downstream of the scale (B), a front ramp (R2) is mounted, which is delimited laterally by walls (P2), which are provided with open intervals, together with which downside ramps (R3) are mounted; and wherein, in the transition regions of the anterior ramp (R2) to the lateral ramps (R3), Automated collector blades (K) are mounted, which perform angular semi-turn movement by means of motorized drive.
